# FASCICULE DE BREVET EUROPEEN

(11) **EP 3 061 669 B1**
(45) Date de publication et mention de la délivrance du brevet: **11.04.2018**
(21) Numéro de dépôt: 16157364.7
(22) Date de dépôt: 25.02.2016
(51) Int. Cl.: B62D 1/184

(54) **DISPOSITIF DE VERROUILLAGE D'UNE COLONNE DE DIRECTION RÉGLABLE DE VÉHICULE AUTOMOBILE**
SPERRVORRICHTUNG FÜR EINE VERSTELLBARE LENKSÄULE EINES KRAFTFAHRZEUGS
LOCKING DEVICE FOR AN ADJUSTABLE STEERING COLUMN OF AN AUTOMOBILE VEHICLE

(30) Priorité: 27.02.2015 FR 1551687
(43) Date de publication de la demande: 31.08.2016
(73) Titulaire: Fuji Autotech France SAS, 25350 Mandeure (FR)
(72) Inventeur: XOLIN, Frédéric, 25260 LONGEVELLE-SUR-DOUBS (FR)
(74) Mandataire: Lavoix

(56) Documents cités:
- EP-A2- 1 747 967
- WO-A1-2013/097922
- JP-A- 2006 051 876

## Description

La présente invention concerne un dispositif de verrouillage d'une colonne de direction réglable de véhicule automobile comprenant :
- une mâchoire, destinée à être reliée au véhicule, et destinée à recevoir une colonne de direction,
- des moyens de blocage de la colonne en position par rapport à la mâchoire et comprenant :
   - un arbre s'étendant perpendiculairement à la mâchoire,
   - un levier de verrouillage placé à une extrémité de l'arbre, le levier étant déplaçable en rotation par rapport à la mâchoire entre une position active de verrouillage de la colonne et une position de déverrouillage de celle-ci,
   - une came fixée à l'un parmi le levier et la mâchoire, et
   - une contre-came fixée à l'autre parmi le levier et la mâchoire, la contre-came étant mobile par rapport à la came suivant une trajectoire de verrouillage.

Le document WO 2013/097922, par exemple, montre ces caractéristiques.

Certains véhicules automobiles sont munis d'un volant réglable en hauteur, notamment pour des raisons de confort du conducteur du véhicule. A cet effet, la structure de la colonne de direction est déplaçable et ainsi, la hauteur du volant peut être ajustée. Un mécanisme de verrouillage en position de la structure de la colonne permet de maintenir le volant à la hauteur choisie par l'utilisateur.

Ces dispositifs de réglage comportent une structure de support de colonne reliée au reste de la structure du véhicule. La structure de support de colonne comporte deux parois entre lesquels la colonne est disposée et des moyens de blocage de la colonne en position par rapprochement des parois.

Ces moyens de blocage comprennent par exemple un arbre s'étendant entre les parois, dont une première extrémité est en appui sur l'une des parois et dont une seconde est reliée à des éléments de blocage. Les éléments de blocage comportant par exemple un ensemble de cames et contre-cames.

Un levier de manoeuvre permet de déplacer les éléments de blocage et ainsi de rapprocher les deux parois afin de fixer la colonne en position. Lorsque les éléments de blocage s'éloignent l'un de l'autre, les parois de la structure se resserrent et la colonne est verrouillée en position. On conçoit que plus le serrage de la colonne à obtenir est important, plus les frottements entre ces différents éléments de blocage sont importants et donc plus la manoeuvre du levier est difficile.

Pour pallier ce problème, le document EP 0 592 278 décrit un dispositif dont la structure générale se présente sous la forme décrite précédemment. Des éléments de roulement sont insérés entre les éléments de blocage afin de limiter les frottements lors de la manoeuvre du levier.

Cependant, ces dispositifs sont soumis à une importante usure des pièces, ce qui se traduit par des problèmes de fonctionnement du dispositif. De plus, lors du déverrouillage, la colonne se débloque brusquement, ce qui n'est pas agréable pour le conducteur.

Le but de la présente invention est de fournir un dispositif agréable à utiliser, simple et fiable.

A cet effet, la présente invention a pour objet un dispositif de verrouillage selon la revendication 1.

Selon des modes de réalisation particuliers, le dispositif de verrouillage suivant l'invention comprend l'une ou plusieurs des caractéristiques suivantes, selon les revendications dépendantes:
- les matières de duretés différentes sont choisies dans le groupe de matières consistant en un métal, un élastomère, un caoutchouc et un plastique ;
- la contre-came est en contact simultanément avec les deux parties en matières de duretés différentes sur une partie de la trajectoire de verrouillage ;
- une des matières de la came présente une dureté Shore comprise entre 10 Shore A et 100 Shore A ;
- la came présente sur au moins une partie de la trajectoire de verrouillage, une rampe dont la pente est progressivement décroissante lorsque le levier se déplace suivant la trajectoire de verrouillage, de sorte que la hauteur de la rampe s'accroît de moins en moins vite le long de la trajectoire de verrouillage ;
- chaque partie en matière de duretés différentes présente une rampe et la pente d'une des deux rampes est plus importante que la pente de l'autre sur une partie de la trajectoire de verrouillage ;
- le dispositif comprend une ligne de niveau où les deux rampes ont la même hauteur, la différence de hauteur entre les deux rampes s'accroissant de part et d'autre de la ligne de niveau depuis la ligne de niveau, sur une partie de la trajectoire de verrouillage.

L'invention sera mieux comprise à la lecture de la description qui va suivre, donnée uniquement à titre d'exemple, et faite en se référant aux dessins annexés, sur lesquels :
- la figure 1 est une vue en coupe schématique d'un dispositif de verrouillage de la colonne de direction selon l'invention ;
- la figure 2 est une vue schématique en perspective éclatée, des moyens d'écartement du dispositif de la figure 1 ;
- la figure 3 est une vue schématique en perspective des moyens d'écartement du dispositif de la figure 1, le disque de contre-cames étant présenté en vue semi-écorchée ;
- la figure 4 est une vue en coupe schématique suivant un profil circulaire, d'une came et d'une contre-came, des moyens d'écartement de la figure 3 en position de verrouillage ; et
- la figure 5 est une vue schématique en perspective de dessus, d'un disque de contre-cames du dispositif de la figure 1 ;
- la figure 6 est une vue analogue à la figure 4, de la came et de la contre-came de la figure 5 dans une position intermédiaire de déverrouillage.

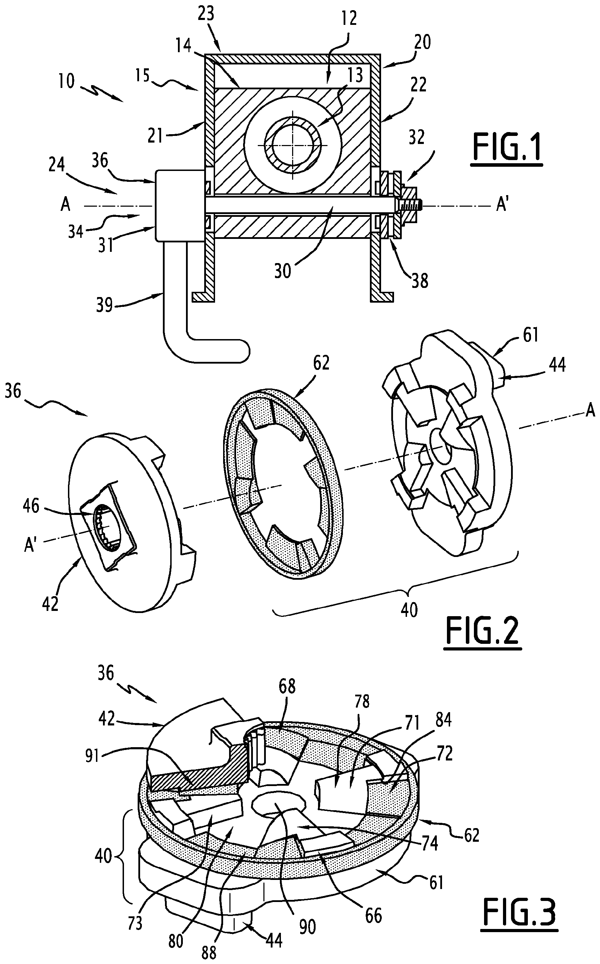

La figure 1 représente un dispositif 10 de verrouillage d'une colonne 12 de direction réglable de véhicule automobile.

La colonne de direction 12 comporte un arbre de direction télescopique 13 et un support de colonne 14 à travers duquel l'arbre de direction 13 est monté rotatif. L'arbre de direction 13 est de forme générale de révolution autour d'un axe longitudinal. L'arbre de direction 13 est destiné à être relié cinématiquement, d'une part, à un volant du véhicule et, d'autre part, à un joint. La colonne de direction 12 est réglable en hauteur et coopère avec le dispositif 10 de verrouillage pour son maintien en position.

Le dispositif 10 de verrouillage comporte une chape 15 dans laquelle est reçu le support de colonne 14.

La chape 15 est reliée à un élément de la structure du véhicule automobile, par exemple sous le tableau de bord par un moyen de fixation approprié. La chape 15 comporte une mâchoire 20 en forme de U. Deux parois 21, 22 reliées par une âme 23 forment des mors de la mâchoire 20. Les deux parois 21, 22 de la mâchoire 20 sont espacées parallèlement l'une de l'autre de façon à définir entre elles un passage de réception pour le support de colonne de direction 14.

Chaque paroi 21, 22 définit un trou. Les trous ont le même axe AA' qui est perpendiculaire à l'axe principale de la colonne de direction.

Afin de verrouiller la colonne 12 de direction en position, le dispositif 10 de verrouillage comporte des moyens de serrage 24 des première 21 et seconde 22 parois de la mâchoire 20 l'une vers l'autre.

Les moyens de serrage 24 comportent un arbre 30 formant un tirant s'étendant longitudinalement selon l'axe AA' et traversant les premières et secondes parois 21, 22. L'arbre 30 comporte une première extrémité 31 et une seconde extrémité 32 de part et d'autre de la mâchoire 20.

La première extrémité 31 de l'arbre 30, voisine de la première paroi 21, comporte des moyens de mise sous tension de l'arbre 30 formés par des moyens 36 d'écartement de l'extrémité 31 de l'arbre par rapport à la paroi 21.

La seconde extrémité 32 de l'arbre 30, voisine de la seconde paroi 22, comporte des moyens d'appui 38 sur la seconde paroi 22. Ces moyens d'appui 38 sont par exemple une rondelle d'appui retenue par un écrou vissé à l'extrémité 32 de l'arbre.

Un levier 39 est destiné à être manipulé par le conducteur lorsqu'il souhaite libérer ou verrouiller la colonne de direction en position. Le levier 39 est monté sur l'arbre 30 du côté de la première extrémité 31 de l'arbre. Le levier 39 est mobile par rapport à la chape (15), en rotation autour de l'axe AA', avec l'arbre 30 auquel il est solidarisé axialement, entre une position de verrouillage de la colonne 12 et une position de déverrouillage de la colonne 12. Il est propre à commander les moyens d'écartement 36.

Les moyens d'écartement 36 sont illustrés sur les figures 2 à 6. Les moyens d'écartement 36 comportent un disque de cames 40 et un disque de contre-cames 42 engagés autour de l'arbre 30. Le disque de contre-cames 42 est solidaire du levier 39.

Le disque de cames 40 est représenté sur la figure 2 et la figure 3.

Le disque de cames 40 s'applique contre la paroi 21 et est retenu en rotation par rapport à celle-ci par des doigts 44 du disque reçus dans des lumières oblongues ménagées dans la paroi 21 et le long desquelles les doigts 44 sont montés coulissants.

Le disque de contre-cames 42 est solidaire en rotation du levier 39 par un profil d'entraînement 46. Il est également solidaire en rotation de l'arbre 30 par des cannelures complémentaires ménagées sur l'arbre 30 et le disque de contre-cames 42.

Le disque de contre-cames 42 est monté mobile en translation le long de l'axe AA' de l'arbre 30 entre une position axialement écartée de la première paroi 21 et une position axialement rapprochée de la première paroi 21. Le disque de contre-cames 42 est de plus mobile en rotation autour de l'axe AA' de l'arbre 30.

Le disque de cames 40 est formé de deux bagues 61, 62 constituées de matières de duretés différentes propres à coopérer successivement avec le disque de contre-cames 42 lors du déverrouillage ou du verrouillage de la colonne de direction.

La première bague 61 comportant les doigts 44 est de dureté la plus importante. Elle est formée dans l'exemple illustré ici de métal. La deuxième bague 62 de dureté plus faible est formée, en élastomère, en caoutchouc ou en plastique. La matière de dureté la plus faible présente une élasticité plus importante que l'élasticité de la matière de dureté la plus importante. La dureté Shore de la matière de dureté la plus faible est avantageusement comprise entre 10 Shore A et 100 Shore A.

La bague 62 est rapportée sur la bague 61. Les bagues 61 et 62 sont illustrées de manière éclatée sur la figure 2 et de manière assemblée sur la figure 3.

Le disque de cames 40 de l'exemple représenté sur la figure 3 comporte quatre cames 66 sur la face orientée vers le disque de contre-cames 42. Ces cames 66 sont équiréparties angulairement par rapport à l'axe de symétrie du disque de cames 40. Ces cames 66 sont formées successivement à la surface des deux bagues 61, 62.

Les cames 66 présentent des saillies 68. Les saillies 68 présentent une forme convexe s'étendant angulairement autour de l'axe AA' suivant un arc de cercle. Comme on peut le voir sur la figure 3, chaque came 66 présente deux profils 71, 72 côte à côte radialement délimités respectivement par la bague 61 et 62.

Dans toute la suite, les hauteurs sont mesurées suivant l'axe AA'.

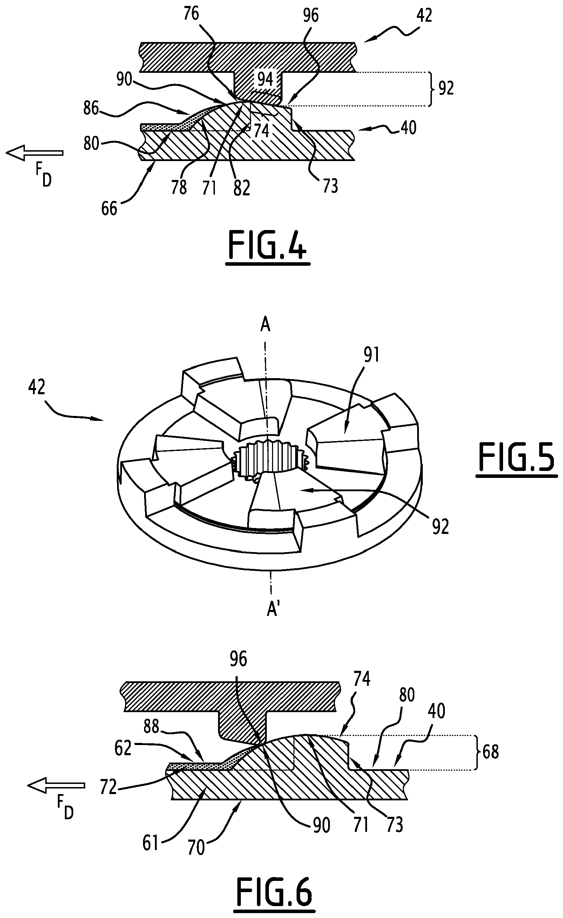

Comme illustré sur la figure 4, le profil 71 décrit orthoradialement suivant la trajectoire de déverrouillage illustrée par la flèche F_{D}, un front vertical 73 formant une butée, une rampe d'appui 74 ascendante suivant le sens de la flèche F_{D}, un sommet 76 et une rampe descendante 78 suivant le sens de la flèche F_{D} et une plaine 80. La pente de la rampe descendante 78 est de plus en plus importante le long de la trajectoire de déverrouillage suivant le sens de la flèche F_{D}.

La rampe d'appui 74 est de hauteur progressivement croissante suivant la trajectoire de déverrouillage alors que la rampe descendante 78 est de hauteur progressivement décroissante suivant cette même trajectoire de déverrouillage.

Le second profil 72, le plus éloigné radialement du centre est délimité par la bague 62. La surface de ce second profil 72 décrit orthoradialement dans la trajectoire de déverrouillage, un front vertical 82 formant une butée, une arête 84 de sommet, une rampe descendante 86 de pente croissante et une plaine 88.

À un certain angle de la trajectoire de déverrouillage, les rampes descendantes 78, 86 des deux profils 71, 72, ont la même hauteur. Cette ligne de niveau est notée 90. Les pentes ou coefficients directeurs des deux rampes 78, 86 sont telles que, en considérant le sens de déverrouillage, la hauteur du profil 71 est supérieure à celle du profil 72 jusqu'à la ligne 90 puis la hauteur du profil 71 est inférieure à celle du profil 72 au-delà.

Les différences de hauteurs entre profils 71 et 72 s'accroissent en s'écartant de la ligne 90 de part et d'autre de cette ligne 90. La pente de la rampe 86 du deuxième profil 72 est moins importante que la pente de la rampe 78 du premier profil 71.

Le disque de contre-cames 42 est représenté sur la figure 5.

Le disque de contre-cames 42 représenté comporte quatre contre-cames 91 sur la face orientée vers le disque de cames 40 équiréparties angulairement par rapport à l'axe de symétrie du disque de contre-cames 42.

Les surfaces des contre-cames 91 présentent des saillies 92 propres à coopérer avec les profils 71, 72 des cames 66. Les saillies 92 présentent une forme de rampe s'étendant angulairement autour de l'axe AA'. Chaque contre-came 91 présente sur sa partie en saillie 92, une surface d'appui 94 propre à coopérer avec la rampe d'appui 74 de la came 66 en regard en position de verrouillage. La surface d'appui 94 de la contre-came 91 délimite une arête de contact 96 propre à suivre les profils 71, 72.

Les surfaces en regard des cames 66 et contre-cames 92 sont destinées à imposer un écartement entre le disque de cames 40 et le disque de contre-cames 42. L'écartement maximal entre le disque de cames 40 et le disque de contre-cames 42 est l'écartement de verrouillage de la colonne 12.

Le fonctionnement du dispositif 10 de verrouillage va maintenant être décrit.

Le dispositif 10 selon l'invention permet de verrouiller la colonne 12 en position, de la déverrouiller pour ajuster la hauteur du volant et de la verrouiller à nouveau une fois la hauteur choisie.

La position de verrouillage est illustrée sur la figure 4 pour une came 66 et la contre-came 91 en regard.

Dans la position de verrouillage, la surface d'appui 94 de la contre-came 91 est en contact avec la rampe d'appui 74 de la came 66. La surface d'appui 94 de la contre-came 91 est seulement en contact avec le premier profil 71 de la came 66, c'est-à-dire, la partie dans la matière la plus dure de la came 66. La came 66 est en tension contre la contre-came 91.

Dans cette position, la contre-came 91 est dans une position axialement éloignée de la came 66 sur l'axe AA' de l'arbre 30. Les moyens d'écartement 36 sont dans leur position écartée. Les moyens d'écartement 36 imposent alors un serrage des parois 21, 22 de la mâchoire 20 l'une vers l'autre. Le support de colonne 14 est donc enserré dans les mâchoires 20. La colonne 12 de direction ne se déplace donc pas en hauteur. La hauteur du volant est fixée.

Lorsque l'utilisateur manoeuvre le levier 39, il fait tourner la contre-came 91 par l'intermédiaire du levier 39, et du disque de contre-cames 42 dans le sens de déverrouillage. La contre-came 91 se déplace donc par rapport à la came 66 dans le sens de déverrouillage F_{D}.

Le déverrouillage est un processus en plusieurs phases.

Dans une première phase, la surface d'appui 94 de la contre-came 91 glisse sur la came 66 depuis la rampe d'appui 74 de la came 66 vers le sommet 76. Pendant cette première phase, la contre-came 91 est toujours en contact seulement avec le profil 71 en métal. La surface d'appui 94 de la contre-came contre la came 66 diminue puis seule l'arête 96 de la contre-came 91 est en contact avec la came 66.

Au cours de cette première phase, le disque de cames 40 et le disque de contre-cames 42 s'éloignent légèrement. La mâchoire 20 se resserre et la tension augmente.

Dans une deuxième phase, l'arête 96 de la contre-came 91 glisse en appui seulement contre la rampe descendante 78 en métal de la came 66 depuis le sommet 76 vers la ligne de niveau 90.

En raison de la pente de la rampe descendante 78, les disques de cames 40 et de contre-cames 42 se rapprochent progressivement. La mâchoire 20 se desserre et la tension diminue petit à petit.

Dans une troisième phase du déverrouillage, au-delà de la ligne 90, dans la suite de la trajectoire de déverrouillage, l'arête 96 de la contre-came 91 se déplace en contact simultané avec les deux profils 71, 72 de matières différentes de la came. Le profil 72 en élastomère permet alors de ralentir le mouvement de rotation de la contre-came 91 par frottement.

Dans une dernière phase du déverrouillage, l'arête 96 de la contre-came 91 est seulement en contact avec le profil 72 en élastomère sur la rampe 86 puis sur la plaine 88.

Progressivement la mâchoire 20 se desserre jusqu'à permettre le déplacement de la colonne 12.

La rotation de la contre-came 91 dans le sens de déverrouillage est possible jusqu'à ce que la contre-came 91 vienne en butée contre le front vertical 73 de la partie en saillie 68 de la came 66 suivante.

Dans une variante, le profil 72 en matière présentant la dureté la plus faible présente une butée permettant d'arrêter la rotation de la came 66 sur la contre-came 91.

Pendant le déverrouillage, le disque de cames 40 et le disque de contre-cames 42 se rapprochent peu à peu sur l'axe AA' de l'arbre 30. Les moyens d'écartement 36 imposent donc un serrage de moins en moins important aux parois 21, 22 de la mâchoire 20. La colonne 12 est libérée ce qui permet son réglage en hauteur.

La présence de l'élastomère sur la came 66 permet de conserver un mouvement souple lors des différentes phases de déverrouillage. Lors de la deuxième phase du déverrouillage, les forces de tension entre la came 66 et la contre-came 91 diminuent du fait de l'écartement. La présence d'un frottement élastique à partir de la troisième phase du déverrouillage permet de garder un effort sensiblement constant de la part de l'utilisateur. Ainsi, la colonne 12 n'est pas déverrouillée brutalement, et le levier 39 est agréable à utiliser.

Pour verrouiller la colonne 12 en position, l'utilisateur tourne le levier 39 dans le sens opposé au sens de déverrouillage. La rotation du levier 39 dans l'autre sens permet à l'arête 96 de la contre-came 91 de remonter les rampes 78, 86 des profils 71, 72 de la came 66.

Une partie du profil 72 de la came 66 est comprimée lors du verrouillage et de la remise en tension de la came 66 contre la contre-came 91. La matière de ce profil 72 est choisie pour avoir une élasticité suffisante afin de se déformer lors du verrouillage. Les efforts de compression de la contre-came 91 sur la came 66 sont ainsi appliqués directement le long du profil 71 en matière présentant la dureté la plus importante.

Selon, la trajectoire de verrouillage, l'arête 96 de la contre-came 91 glisse jusqu'à ce que la rampe d'appui 74 de la came 66 soit en contact avec la surface d'appui 94 de la contre-came 91.

Le disque de cames 40 s'éloigne du disque de contre-cames 42. La mâchoire 20 se resserre. La colonne 12 est verrouillée en position. La rotation dans le sens de verrouillage est stoppée par des moyens de butée non représentées. Lorsque le verrouillage est stoppé, le serrage de la mâchoire 20 est maximal. La colonne 12 de direction est ainsi immobilisée en hauteur.

En particulier, l'invention s'applique à un nombre de came 66 et de contre-came 91 différents, et à une disposition différente des profils 71, 72 et des surfaces d'appuis 94. En variante, la rampe d'appui 74 est plane.

## Revendications

1. Dispositif (10) de verrouillage d'une colonne (12) de direction réglable de véhicule automobile comprenant :
- une mâchoire (20), destinée à être reliée au véhicule, et destinée à recevoir une colonne de direction (12),
- des moyens de blocage de la colonne (12) en position par rapport à la mâchoire (20) et comprenant :
- un arbre (30) s'étendant perpendiculairement à la mâchoire (20),
- un levier (39) de verrouillage placé à une extrémité (31) de l'arbre (30), le levier (39) étant déplaçable en rotation par rapport à la mâchoire (20) entre une position active de verrouillage de la colonne et une position de déverrouillage de celle-ci,
- une came (66) fixée à l'un parmi le levier (39) et la mâchoire (20), et
- une contre-came (91) fixée à l'autre parmi le levier (39) et la mâchoire (20), la contre-came (91) étant mobile par rapport à la came (66) suivant une trajectoire de verrouillage, la came (66) comportant, le long de la trajectoire de verrouillage, au moins deux parties (61, 62) formées en deux matières de duretés différentes propres à coopérer successivement avec la contre-came (91),
**caractérisé en ce que**
les parties (61, 62) en matières de duretés différentes sont radialement côte à côte sur une partie de la trajectoire de verrouillage.

2. Dispositif (10) selon la revendication 1, **caractérisé en ce que** les matières de duretés différentes sont choisies dans le groupe de matières consistant en un métal, un élastomère, un caoutchouc et un plastique.

3. Dispositif (10) selon l'une quelconque des revendications 1 et 2, **caractérisé en ce que** la contre-came (91) est en contact simultanément avec les deux parties (61, 62) en matières de duretés différentes sur une partie de la trajectoire de verrouillage.

4. Dispositif (10) selon l'une quelconque des revendications précédentes, **caractérisé en ce qu'**une des matières de la came (66) présente une dureté Shore comprise entre 10 Shore A et 100 Shore A.

5. Dispositif (10) selon l'une quelconque des revendications précédentes, **caractérisé en ce que** la came (66) présente sur au moins une partie de la trajectoire de verrouillage, une rampe (78, 86) dont la pente est progressivement décroissante lorsque le levier (39) se déplace suivant la trajectoire de verrouillage, de sorte que la hauteur de la rampe (78, 86) s'accroît de moins en moins vite le long de la trajectoire de verrouillage.

6. Dispositif (10) selon l'une quelconque des revendications précédentes, **caractérisé en ce que** chaque partie (61, 62) en matière de duretés différentes présente une rampe (78, 86) et la pente d'une des deux rampes (78, 86) est plus importante que la pente de l'autre sur une partie de la trajectoire de verrouillage.

7. Dispositif (10) selon la revendication 6, **caractérisé en ce qu'**il comprend une ligne de niveau (90) où les deux rampes (78, 86) ont la même hauteur, la différence de hauteur entre les deux rampes (78, 86) s'accroissant de part et d'autre de la ligne de niveau (90) depuis la ligne de niveau (90), sur une partie de la trajectoire de verrouillage.

## Patentansprüche

1. Vorrichtung (10) zur Verriegelung einer verstellbaren Lenksäule (12) eines Kraftfahrzeugs, aufweisend:
- ein Rachenteil (20), das dazu bestimmt ist, um mit dem Fahrzeug verbunden zu sein, und das dazu bestimmt ist, eine Lenksäule (12) aufzunehmen,
- Mittel zur Blockierung der Säule (12) in Position bezüglich des Rachenteils (20) und die aufweisen:
- eine Welle (30), die sich senkrecht zu dem Rachenteil (20) erstreckt,
- einen Verriegelungs-Hebel (39), der an einem Ende (31) der Welle (30) angeordnet ist, wobei der Hebel (39) rotationsverstellbar ist bezüglich des Rachenteils (20) zwischen einer Aktivposition zur Verriegelung der Säule und einer Position zur Entriegelung dieser,
- eine Vorsprungscheibe (66), die an einem von dem Hebel (39) und dem Rachenteil (20) fixiert ist, und
- eine Gegenvorsprungscheibe (91), die an dem anderen von dem Hebel (39) und dem Rachenteil (20) fixiert ist, wobei die Gegenvorsprungscheibe (91) bezüglich der Vorsprungscheibe (66) bewegbar ist entlang einer Verriegelungsbahn,
wobei die Vorsprungscheibe (66) aufweist,
entlang der Verriegelungsbahn, wenigstens zwei Teile (61, 62), die aus zwei Materialien unterschiedlicher Härten gebildet sind und imstande sind, sukzessive mit der Gegenvorsprungscheibe (91) zusammenzuwirken,
**dadurch gekennzeichnet, dass** die Teile (61, 62) aus Materialien unterschiedlicher Härten über einen Teil der Verriegelungsbahn radial Seite-an-Seite sind.

2. Vorrichtung (10) gemäß Anspruch 1, **dadurch gekennzeichnet, dass** die Materialien unterschiedlicher Härten gewählt sind aus der Gruppe von Materialien, bestehend aus einem Metall, einem Elastomer, einem Kautschuk und einem Kunststoff.

3. Vorrichtung (10) gemäß irgendeinem der Ansprüche 1 und 2, **dadurch gekennzeichnet, dass** die Gegenvorsprungscheibe (91) über einen Teil der Verriegelungsbahn gleichzeitig in Kontakt ist mit den beiden Teilen (61, 62) aus Materialen unterschiedlicher Härten.

4. Vorrichtung (10) gemäß irgendeinem der vorhergehenden Ansprüche, **dadurch gekennzeichnet, dass** eines der Materialien der Vorsprungscheibe (66) eine Shore-Härte hat, die zwischen 10 Shore A und 100 Shore A liegt.

5. Vorrichtung (10) gemäß irgendeinem der vorhergehenden Ansprüche, **dadurch gekennzeichnet, dass** die Vorsprungscheibe (66) über wenigstens einen Teil der Verriegelungsbahn eine Rampe (78, 86) hat, deren Neigung progressiv abnimmt, wenn der Hebel (39) sich entlang der Verriegelungsbahn verlagert, so dass die Höhe der Rampe (78, 86) entlang der Verrieglungsbahn immer weniger zunimmt.

6. Vorrichtung (10) gemäß irgendeinem der vorhergehenden Ansprüche, **dadurch gekennzeichnet, dass** jeder Teil (61, 62) aus Material unterschiedlicher Härten eine Rampe (78, 86) hat und die Neigung von einer der beiden Rampen (78, 86) über einen Teil der Verriegelungsbahn größer ist als die Neigung der anderen.

7. Vorrichtung (10) gemäß Anspruch 6, **dadurch gekennzeichnet, dass** sie aufweist eine Niveau-Linie (90), wo die beiden Rampen (78, 86) die gleiche Höhe haben, wobei der Höhenunterschied zwischen den beiden Rampen (78, 86) beidseitig der Niveau-Linie (90) ausgehend von der Niveau-Linie (90) über einen Teil der Verriegelungsbahn ansteigt.

## Claims

1. Device (10) for locking an adjustable steering column (12) of a motor vehicle, comprising:
- a jaw (20) which is to be connected to the vehicle and is to receive a steering column (12),
- means for fixing the column (12) in position relative to the jaw (20) and comprising:
- a shaft (30) extending perpendicularly to the jaw (20),
- a locking lever (39) located at one end (31) of the shaft (30), the lever (39) being displaceable in rotation relative to the jaw (20) between an active position for locking the column and a position for unlocking the column,
- a cam (66) fixed to one of the lever (39) and the jaw (20), and
- a cam follower (91) fixed to the other of the lever (39) and the jaw (20), the cam follower (91) being movable relative to the cam (66) along a locking path,
the cam (66) having along the locking path at least two parts (61, 62) formed of two materials of different hardnesses, capable of cooperating in succession with the cam follower (91),
**characterised in that**
the parts (61, 62) made of materials of different hardnesses are radially side by side over a portion of the locking path.

2. Device (10) according to claim 1, **characterised in that** the materials of different hardnesses are chosen from the group of materials consisting of a metal, an elastomer, a rubber and a plastics material.

3. Device (10) according to either claim 1 or claim 2, **characterised in that** the cam follower (91) is simultaneously in contact with the two parts (61, 62) made of materials of different hardnesses over a portion of the locking path.

4. Device (10) according to any one of the preceding claims, **characterised in that** one of the materials of the cam (66) has a Shore hardness of between 10 Shore A and 100 Shore A.

5. Device (10) according to any one of the preceding claims, **characterised in that** the cam (66) has over at least a portion of the locking path a ramp (78, 86), the slope of which decreases progressively when the lever (39) moves along the locking path, so that the height of the ramp (78, 86) increases less and less quickly along the locking path.

6. Device (10) according to any one of the preceding claims, **characterised in that** each of the parts (61, 62) made of materials of different hardnesses has a ramp (78, 86), and the slope of one of the two ramps (78, 86) is greater than the slope of the other over a portion of the locking path.

7. Device (10) according to claim 6, **characterised in that** it comprises a level line (90) where the two ramps (78, 86) have the same height, the difference in height between the two ramps (78, 86) increasing on either side of the level line (90) starting from the level line (90), over a portion of the locking path.
